(19) **Europäisches Patentamt / European Patent Office / Office européen des brevets**

(11) **EP 4 383 395 A1**

(12) # EUROPEAN PATENT APPLICATION

(43) Date of publication:
**12.06.2024 Bulletin 2024/24**

(21) Application number: **23215089.6**

(22) Date of filing: **07.12.2023**

(51) International Patent Classification (IPC):
**H01M 10/0567** (2010.01)　　　**H01M 10/0569** (2010.01)

(52) Cooperative Patent Classification (CPC):
**H01M 10/0567; H01M 4/5825; H01M 10/0525; H01M 10/0568; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 KR 20220171765**

(71) Applicant: **SK On Co., Ltd.**
**Seoul 03161 (KR)**

(72) Inventors:
- **PARK, Min Woo**
  **34124 Daejeon (KR)**
- **KIM, Jeong Yun**
  **34124 Daejeon (KR)**
- **PARK, Seon Yeong**
  **34124 Daejeon (KR)**

(74) Representative: **Stolmár & Partner**
**Patentanwälte PartG mbB**
**Blumenstraße 17**
**80331 München (DE)**

(54) **ELECTROLYTE SOLUTION FOR LITHIUM SECONDARY BATTERY AND LITHIUM SECONDARY BATTERY COMPRISING THE SAME**

(57)　An electrolyte for a lithium secondary battery according to an embodiment of the present disclosure includes, a non-aqueous organic solvent including a propionate solvent; and a lithium salt. The propionate solvent includes at least one of ethyl propionate (EP) and propyl propionate (PP). The lithium salt includes lithium hexafluorophosphate ($LiPF_6$) and lithium bisfluorosulfonylimide (LiFSI).

EP 4 383 395 A1

**Description**

**BACKGROUND**

**1. Technical Field**

The present disclosure relates generally to secondary battery electrolytes and, more particularly, to an electrolyte for a lithium secondary battery and a lithium secondary battery including the electrolyte.

**2. Related Art**

With development of the electronics, communications, and space industries, demand for secondary batteries such as lithium secondary batteries as an energy power source is rapidly increasing. In particular, as the importance of global eco-friendly policies is emphasized, the electric vehicle market is growing by leaps and bounds, and research and development on secondary batteries is actively carried out at home and abroad.

The lithium secondary battery includes a cathode, an anode, and a separator disposed therebetween, and an active material capable of inserting and extracting lithium ions is provided on the cathode and the anode, respectively. In addition, the lithium secondary battery includes an electrolyte including a lithium salt. Here, the electrolyte may function as a medium for the movement of lithium ions between the cathode and the anode.

Meanwhile, lithium secondary batteries need to have various operation/performance characteristics. For example, lithium secondary batteries need to have sufficient capacity characteristics and life characteristics, and in particular, considering the operating environment of the lithium secondary battery, the lithium secondary battery is required to have sufficient capacity characteristics and life characteristics under severe conditions such as low or high temperature environments. Hence, improvements in the performance characteristics of the lithium secondary batteries will be highly desirable.

**SUMMARY**

Embodiments of the present invention provide an electrolyte for a lithium secondary battery having substantially improved low-temperature capacity characteristics and high-temperature life characteristics, and a lithium secondary battery including the same.

In accordance with an aspect of the present disclosure, an electrolyte for a lithium secondary battery may comprise: a non-aqueous organic solvent comprising a propionate solvent; and a lithium salt. The propionate solvent may comprise at least one of ethyl propionate and propyl propionate. The lithium salt may comprise lithium hexafluorophosphate and lithium bisfluorosulfonylimide.

According to an embodiment, the lithium hexafluorophosphate may be included in a concentration of 0.5M to 0.7M with respect to the non-aqueous organic solvent.

According to an embodiment, the lithium bisfluorosulfonylimide may be included in a concentration of 0.1M to 0.6M with respect to the non-aqueous organic solvent.

According to an embodiment, the propionate solvent may be included in an amount of 5 vol% to 20 vol% with respect to the non-aqueous organic solvent.

According to an embodiment, the propionate solvent may comprise the ethyl propionate in an amount of 8 vol% to 12 vol% with respect to the non-aqueous organic solvent.

According to an embodiment, the propionate solvent may comprise the propyl propionate in an amount of 8 vol% to 12 vol% with respect to the non-aqueous organic solvent.

According to an embodiment, the non-aqueous organic solvent may further comprise a carbonate solvent. The carbonate solvent may comprise at least one of ethylene carbonate and ethyl methyl carbonate.

According to an embodiment, the ethylene carbonate may be included in an amount of 20 vol% to 30 vol% with respect to the non-aqueous organic solvent. The ethyl methyl carbonate may be included in an amount of 60 vol% to 70 vol% with respect to the non-aqueous organic solvent.

According to an embodiment, the electrolyte may further comprise at least one additive selected from a group consisting of cyclic carbonate-based compounds, fluorine-substituted carbonate-based compounds, sultone-based compounds, cyclic sulfate-based compounds, cyclic sulfite-based compounds, borate-based compounds, and phosphate-based compounds.

According to an embodiment, the electrolyte may further comprising at least one additive selected from a group consisting of vinyl ethylene carbonate, vinylene carbonate, 1,3-propane sultone, fluoro ethylene carbonate, ethylene sulfite, lithium bisoxalato borate, lithium difluorophosphate, and adiponitrile.

According to an embodiment, the additive may be included in 0.01 wt% to 15 wt% with respect to a total weight of the electrolyte.

In accordance with an aspect of the present disclosure, a lithium secondary battery may comprise: a cathode comprising a cathode active material; an anode comprising an anode active material; a separator disposed between the cathode and the anode; and an electrolyte comprising a non-aqueous organic solvent comprising a propionate solvent and a lithium salt. The propionate solvent may comprise at least one of ethyl propionate and propyl propionate. The lithium salt may comprise lithium hexafluorophosphate and lithium bisfluorosulfonylimide.

According to an embodiment, the non-aqueous organic solvent may further comprise a carbonate solvent. the cathode active material may comprise a lithium metal phosphate particle represented by Formula 1 below:

$$\text{Formula 1} \qquad \text{Li}_w\text{M}_x\text{P}_y\text{O}_{4+z}$$

wherein in Formula 1, $0.9 \leq w \leq 1.2$, $0.99 \leq x \leq 1.01$, $0.9 \leq y \leq 1.2$, $-0.1 \leq z \leq 0.1$, and M is at least one selected from a group consisting of Fe, Co, Ni, Mn, Ti and V.

According to an embodiment, the M may be Fe.

In accordance with an aspect of the present disclosure, an electrolyte for a lithium secondary battery may comprise: a non-aqueous organic solvent comprising ethyl propionate or propyl propionate or a combination of ethyl propionate and propyl propionate; and a lithium salt comprising lithium hexafluorophosphate or a lithium bisfluorosulfonylimide, or a combination of hexafluorophosphate and lithium bisfluorosulfonylimide.

According to an embodiment, the lithium salt may comprise hexafluorophosphate and lithium bisfluorosulfonylimide.

According to an embodiment, the non-aqueous organic solvent may comprise ethyl propionate and propyl propionate.

According to an embodiment, the non-aqueous organic solvent may comprise ethyl propionate and propyl propionate. The lithium salt may comprise lithium hexafluorophosphate and lithium bisfluorosulfonylimide.

According to an embodiment, the lithium hexafluorophosphate may be included in a concentration of 0.5M to 0.7M with respect to the non-aqueous organic solvent. The lithium bisfluorosulfonylimide may be included in a concentration of 0.1M to 0.6M with respect to the non-aqueous organic solvent. The propionate solvent may be included in an amount of 5 vol% to 20 vol% with respect to the non-aqueous organic solvent. The propionate solvent may comprise the ethyl propionate in an amount of 8 vol% to 12 vol% with respect to the non-aqueous organic solvent. The propionate solvent may comprise the propyl propionate in an amount of 8 vol% to 12 vol% with respect to the non-aqueous organic solvent.

According to an embodiment, the non-aqueous organic solvent may further comprise a carbonate solvent comprising ethylene carbonate, or ethyl methyl carbonate, or a combination of ethyl methyl carbonate.

According to an embodiment, the ethylene carbonate may be included in an amount of 20 vol% to 30 vol% with respect to the non-aqueous organic solvent. The ethyl methyl carbonate may be included in an amount of 60 vol% to 70 vol% with respect to the non-aqueous organic solvent.

According to an embodiment, the electrolyte may further comprise at least one additive selected from a group consisting of cyclic carbonate-based compounds, fluorine-substituted carbonate-based compounds, sultone-based compounds, cyclic sulfate-based compounds, cyclic sulfite-based compounds, borate-based compounds, and phosphate-based compounds.

According to an embodiment, the electrolyte may further comprise at least one additive selected from a group consisting of vinyl ethylene carbonate, vinylene carbonate, 1,3-propane sultone, fluoro ethylene carbonate, ethylene sulfite, lithium bisoxalato borate, lithium difluorophosphate, and adiponitrile.

According to an embodiment, the additive may be included in 0.01 wt% to 15 wt% with respect to a total weight of the electrolyte.

## DETAILED DESCRIPTION

The specific structural or functional description disclosed herein is merely illustrative for the purpose of describing embodiments according to the concept of the present disclosure. The embodiments according to the concept of the present disclosure can be implemented in various forms, and cannot be construed as limited to the embodiments set forth herein.

Hereinafter, an electrolyte for a lithium secondary battery according to an embodiment and a lithium secondary battery including the same will be described.

1. Electrolyte for lithium secondary battery

An electrolyte according to an embodiment includes an organic solvent, a lithium salt, and optionally an additive.

The organic solvent may include a non-aqueous organic solvent capable of providing sufficient solubility for the lithium salt and optional additives. The non-aqueous organic solvent may mean an organic solvent rather than water. For example, the term "non-aqueous" means that the organic solvent and the electrolyte as a whole is substantially free of water.

Generally, the organic solvent may include an ester-based solvent. According to an embodiment, the organic solvent may include at least one of a carbonate solvent and a propionate solvent. According to an embodiment, the organic solvent may include both a carbonate solvent and a propionate solvent.

According to an embodiment, the organic solvent may include at least one of a carbonate solvent and a propionate solvent. The propionate solvent may include at least one of the groups of ethyl propionate (EP) and propyl propionate (PP).

According to an embodiment, the organic solvent in the electrolyte may include a carbonate solvent and a propionate solvent at the same time, so that sufficient electrical conductivity can be secured, and accordingly, the mobility of lithium ions in the lithium battery may be substantially improved. For example, since a carbonate solvent has a relatively high viscosity, the ion conductivity of a lithium secondary battery may be damaged. However, according to an embodiment, since the organic solvent includes a propionate solvent having a relatively low viscosity and high ionic conductivity together with a carbonate solvent, ionic conductivity may be improved.

According to an embodiment, the content ratio of the carbonate solvent and the propionate solvent for forming the organic solvent is adjusted, so that the aforementioned effect can be further maximized.

According to an embodiment, the carbonate solvent may be included in an amount of 85 vol% to 95 vol% with respect to the organic solvent. For example, when the carbonate solvent includes ethylene carbonate (EC) and ethyl methyl carbonate (EMC), ethylene carbonate (EC) may be included in an amount of 20 vol% to 30 vol% with respect to the organic solvent and ethyl methyl carbonate (EMC) may be included in an amount of 60 vol% to 70 vol% with respect to the organic solvent.

According to an embodiment, the propionate solvent may be included in an amount of 5 vol% to 20 vol% with respect to the organic solvent. For example, propyl propionate (PP) may be included in an amount of 8 vol% to 12 vol% with respect to the organic solvent. Ethyl propionate (EP) may be included in an amount of 8 vol% to 12 vol% with respect to the organic solvent. According to an embodiment, when the organic solvent includes propyl propionate (PP) and ethyl propionate (EP) together, ethyl propionate (EP) and propyl propionate (PP) may be included in a total of 8 vol% to 12 vol% with respect to the organic solvent. According to an embodiment, when the content of the propionate solvent does not satisfy the above numerical range, discharge capacity characteristics and life characteristics at low and high temperatures may be deteriorated.

According to an embodiment, the organic solvent may include only a carbonate solvent without including a propionate solvent. For example, the carbonate solvent may include ethylene carbonate (EC) and ethyl methyl carbonate (EMC), and ethylene carbonate (EC) may be included in an amount of 20 vol% to 30 vol% with respect to the electrolyte, and ethyl methyl carbonate (EMC) may be included in an amount of 60 vol% to 70 vol% with respect to the electrolyte.

According to an embodiment, the lithium salt may include two or more salts. For example, the lithium salt may include one or more of the group of lithium hexafluorophosphate (LiPF$_6$) and lithium bisfluorosulfonylimide (LiFSI). Experimentally, when the lithium salt includes only lithium hexafluorophosphate (LiPF$_6$), HF gas may be generated due to excessive salt decomposition of lithium hexafluorophosphate (LiPF$_6$) in the lithium secondary battery. In this case, the HF gas reacts with components in the lithium secondary battery, and there is a concern that cell performance of the lithium secondary battery may be deteriorated. However, the lithium salt according to an embodiment is two or more different kinds of lithium salts, and may include lithium hexafluorophosphate (LiPF$_6$) and lithium bisfluorosulfonylimide (LiFSI). In this case, compared to using only lithium hexafluorophosphate (LiPF$_6$) of the same content as the lithium salt, low temperature storage characteristics and high temperature high temperature life characteristics may be improved.

According to an embodiment, when the lithium salt includes lithium hexafluorophosphate (LiPF$_6$) and lithium bisfluorosulfonylimide (LiFSI), lithium hexafluorophosphate (LiPF$_6$) may be included in a concentration of 0.2M to 1.OM, or 0.5M to 0.7M with respect to the organic solvent, and lithium bisfluorosulfonylimide (LiFSI) may be included in a concentration of 0.1M to 1.OM, or 0.1M to 0.6M with respect to the organic solvent. According to an embodiment, when the lithium salt satisfies the above numerical range, the transfer of lithium ions may be promoted, thereby improving the capacity characteristics of the battery.

According to an embodiment, the additive may include at least one selected from the group consisting of a cyclic carbonate-based compound, a fluorine-substituted carbonate-based compound, a sultone-based compound, a cyclic sulfate-based compound, a cyclic sulfite-based compound, a borate-based compound, and a phosphate-based compound. According to an embodiment, the additive may include at least one selected from the group consisting of vinyl ethylene carbonate (VEC), vinylene carbonate (VC), 1,3-propane sultone (PS), fluoro ethylene carbonate (FEC), ethylene sulfite (ESA), lithium bis(oxalate) borate (LiBOB), lithium difluorophosphate (LiPO$_2$F$_2$), and adiponitrile (ADN).

According to an embodiment, the additive may be included in 0.01 wt% to 15 wt% based on the total weight of the electrolyte. According to an embodiment, the additive may include vinyl ethylene carbonate (VEC), 1,3-propane sultone (PS), and fluoro ethylene carbonate (FEC) at the same time. Vinyl ethylene carbonate (VEC) may be included in 0.1 wt% to 1.0 wt% based on the total weight of the electrolyte, 1,3-propane sultone (PS) may be included in 1.0 wt% to 3.0 wt% based on the total weight of the electrolyte, and fluoro ethylene carbonate (FEC) may be included in 0.5 wt% to 3.0 wt% based on the total weight of the electrolyte. Vinyl ethylene carbonate (VEC) may be included in 0.5 wt% based on the total weight of the electrolyte, 1,3-propane sultone (PS) may be included in 2.0 wt% based on the total weight of the electrolyte, and fluoro ethylene carbonate (FEC) may be included in 1.0 wt% based on the total weight of the electrolyte.

## 2. Lithium secondary battery

According to an embodiment, a lithium secondary battery including the electrolyte described above is provided.

The lithium secondary battery may include an electrolyte, an electrode assembly comprising a cathode, an anode and a separator, and a case for accommodating the electrolyte and the electrode assembly.

The cathode and the anode may include a current collector and an active material layer disposed on the current collector. For example, the cathode may include a cathode current collector and a cathode active material layer, and the anode may include an anode current collector and an anode active material layer.

The current collector may include a known conductive material within a range that does not cause a chemical reaction in the lithium secondary battery. For example, the current collector may include any one of stainless steel, nickel (Ni), aluminum (Al), titanium (Ti), copper (Cu), and alloys thereof, and may be provided in various forms such as a film, sheet, or foil.

The active material layer includes an active material. For example, the cathode active material layer may include a cathode active material, and the anode active material layer may include an anode active material.

The cathode active material may be a material in which lithium ions can be inserted and extracted. The cathode active material may be lithium metal oxide. For example, the cathode active material may be one or more of lithium manganese oxide, lithium nickel oxide, lithium cobalt oxide, lithium nickel manganese-based oxide, lithium nickel cobalt manganese-based oxide, lithium nickel cobalt aluminum-based oxide, lithium iron phosphate-based compound, lithium manganese phosphate-based compound, lithium cobalt phosphate-based compound, and lithium vanadium phosphate-based compound.

According to an embodiment, the cathode active material may include a lithium iron phosphate-based compound (e.g., $LiFePO_4$).

According to an embodiment, the cathode active material may include a lithium metal phosphate particle represented by Formula 1 below.

$$\text{Formula 1} \qquad Li_wM_xP_yO_{4+z}$$

Here, in Formula 1, $0.9 \leq w \leq 1.2$, $0.99 \leq x \leq 1.01$, $0.9 \leq y \leq 1.2$, $-0.1 \leq z \leq 0.1$, and M may be at least one selected from the group consisting of Fe, Co, Ni, Mn, Ti, and V. According to an embodiment, M may be Fe, and the cathode active material may be a lithium iron phosphate-based compound.

Experimentally, when the cathode includes a cathode active material based on a lithium iron phosphate-based compound, the lithium ion passage is relatively limited, so that the cathode may have high resistance characteristics. In this case, there is a risk that the low-temperature capacity characteristic of the lithium secondary battery may be damaged. However, the electrolyte according to the embodiment may include two or more lithium salts or include a propionate solvent to improve low-temperature capacity characteristics and high-temperature life characteristics. In other words, according to an embodiment, improved low-temperature capacity characteristics and high-temperature life characteristics may be provided in addition to technical effects such as stability that may be implemented when the cathode active material includes the lithium iron phosphate-based compound.

The anode active material may be a material in which lithium ions may be stored and extracted. For example, the anode active material may be any one of crystalline carbon, amorphous carbon, carbon composite, carbon fiber or other carbon-based material, lithium alloy, Si, and Sn. According to an embodiment, the anode active material may be natural graphite, artificial graphite, or a mixture of natural graphite and artificial graphite, but is not limited thereto.

The cathode and the anode may further include a binder and a conductive material, respectively.

The binder may mediate the bond between the current collector and the active material layer, thereby improving mechanical stability. For example, the binder may be an organic binder or a water-based binder. For example, the organic binder may be any one of carboxymethyl cellulose (CMC), vinylidene fluoride-hexafluoropropylene copolymer (PVDF-co-HFP), polyvinylidene fluoride (PVDF), polyacrylonitrile, and polymethylmethacrylate, and the water-based binder may be styrene-butadiene rubber (SBR), but is not limited thereto.

The conductive material may improve the electrical conductivity of the lithium secondary battery. The conductive material may include a metal-based material. The conductive material may include a conventional carbon based conductive material. For example, the conductive material may include any one of graphite, carbon black, graphene, and carbon nanotubes.

The separator is disposed between the cathode and the anode. The separator may be configured to prevent an electrical short circuit between the cathode and the anode and to generate a flow of ions. According to an embodiment, the thickness of the separator may be 10 $\mu$m to 20 $\mu$m, but the present disclosure is not limited thereto.

For example, the separator may include a porous polymer film or a porous nonwoven fabric. The porous polymer film may be composed of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include glass fibers with a high melting point, polyethylene terephthalate fibers. However, it is not limited thereto, and according to an embodiment, the separator may be a ceramic coated separator (CCS) including ceramic.

The electrode assembly may be provided in plurality and sequentially stacked in the case. For example, the electrode assembly may be provided in plurality and may be wound, laminated, folded, or zigzag stacked.

Hereinafter, the present disclosure will be described in more detail based on Examples and Comparative Examples. However, the following Examples and Comparative Examples are only examples for explaining the present disclosure in more detail, and the present disclosure is not limited by the following Examples and Comparative Examples.

In addition, each compound is described as follows.

Carboxymethyl-cellulose: CMC
Polyvinylidene fluoride: PVDF
Styrene-butadiene rubber: SBR
Ethylene carbonate: EC
Ethyl methyl carbonate: EMC
Ethyl propionate: EP
Propyl propionate: PP
Lithium hexafluorophosphate: $LiPF_6$
Lithium bisfluorosulfonylimide: LiFSI
Vinyl ethylene carbonate: VEC
1,3-propane sultone: PS
Fluoro ethylene carbonate: FEC

3. Examples and Comparative Examples

(1) Preparation Example - Examples and Comparative Examples

[Example 1]

Preparation of cathode and anode

After mixing 97.9 wt% of LiFePO4 as a cathode active material, 1.5 wt% of PVDF as a binder, and 0.6 wt% of carbon black as a conductive material, a cathode active material slurry was prepared. The prepared cathode active material slurry was applied to an aluminum foil, dried, and rolled to prepare a cathode.

After mixing a mixture of 66.2 wt% of artificial graphite and 28.3 wt% of natural graphite as an anode active material, 1.2 wt% of CMC and 1.3 wt% of SBR mixture as a binder and 3.0 wt% of graphite as a conductive material, an anode active material slurry was prepared. The prepared anode active material slurry was applied to copper foil, dried, and rolled to prepare an anode.

2) Preparation of electrolyte

A non-aqueous electrolyte according to Example 1 was prepared by dissolving 0.6M $LiPF_6$ and 0.5M LiFSI in a mixed solvent of EC/EMC/PP (24:64:12 vol%), and mixing additives of 0.5 wt% of VEC, 2.0 wt% of PS, and 1.0 wt% of FEC.

3) Preparation of lithium secondary battery

A separator (polyethylene material, thickness 15 $\mu$m) was interposed between the cathode and the anode prepared as described above. Then, a lithium secondary battery was prepared by injecting the electrolyte prepared as described above.

[Example 2]

A non-aqueous electrolyte according to Example 2 was prepared by dissolving 0.6M $LiPF_6$ and 0.5M LiFSI in a mixed solvent of EC/EMC/PP (26:66:8 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 3]

A non-aqueous electrolyte according to Example 3 was prepared by dissolving 0.6M $LiPF_6$ and 0.2M LiFSI in a mixed solvent of EC/EMC/PP (25:65:10 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 4]

A non-aqueous electrolyte according to Example 4 was prepared by dissolving 0.6M $LiPF_6$ and 0.5M LiFSI in a mixed solvent of EC/EMC/EP (24:64:12 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 5]

A non-aqueous electrolyte according to Example 5 was prepared by dissolving 0.6M $LiPF_6$ and 0.5M LiFSI in a mixed solvent of EC/EMC/EP (26:66:8 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 6]

A non-aqueous electrolyte according to Example 6 was prepared by dissolving 0.6M $LiPF_6$ and 0.2M LiFSI in a mixed solvent of EC/EMC/EP (25:65:10 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 7]

A non-aqueous electrolyte according to Example 7 was prepared by dissolving 0.6M $LiPF_6$ and 0.5M LiFSI in a mixed solvent of EC/EMC/EP/PP (25:65:5:5 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Example 8]

A non-aqueous electrolyte according to Example 8 was prepared by dissolving 0.6M $LiPF_6$ and 0.2M LiFSI in a mixed solvent of EC/EMC/EP/PP (25:65:5:5 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Comparative Example 1]

A non-aqueous electrolyte according to Comparative Example 1 was prepared by dissolving 1.2M $LiPF_6$ in a mixed solvent of EC/EMC/EP (25:65:10 vol%), and mixing additives of 0.5 wt% of VEC, 2.0 wt% of PS, and 1.0 wt% of FEC.

A lithium secondary battery was prepared in the same manner as in Example 1 except for the electrolyte preparation method.

[Comparative Example 2]

A non-aqueous electrolyte according to Comparative Example 2 was prepared by dissolving 1.2M LiPF$_6$ in a mixed solvent of EC/EMC/PP (25:65:10 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Comparative Example 3]

A non-aqueous electrolyte according to Comparative Example 3 was prepared by dissolving 1.2M LiPF$_6$ in a mixed solvent of EC/EMC (25:75 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Comparative Example 4]

A non-aqueous electrolyte according to Comparative Example 4 was prepared by dissolving 0.6M LiPF$_6$ and 0.5M LiFSI in a mixed solvent of EC/EMC (25:75 vol%), and mixing additives of 0.5 wt% of VEC, 2.0 wt% of PS, and 1.0 wt% of FEC.
A lithium secondary battery was prepared in the same manner as in Example 1 except for the electrolyte preparation method.

[Comparative Example 5]

A non-aqueous electrolyte according to Comparative Example 5 was prepared by dissolving 1.2M LiPF$_6$ in a mixed solvent of EC/EMC/PP (25:65:10 vol%), and mixing additives of 0.5 wt% of VEC, 2.0 wt% of PS, and 1.0 wt% of FEC.
A cathode active material slurry was prepared using 98.1 wt% of Li[Ni$_{0.8}$Co$_{0.1}$Mn$_{0.1}$]O$_2$ as a cathode active material.
A lithium secondary battery was prepared in the same manner as in Example 1, except for the type of cathode active material and the electrolyte preparation method.

[Comparative Example 6]

A non-aqueous electrolyte according to Comparative Example 6 was prepared by dissolving 1.2M LiPF$_6$ in a mixed solvent of EC/EMC/EP (25:65:10 vol%), and mixing additives of 0.5 wt% of VEC, 2.0 wt% of PS, and 1.0 wt% of FEC.
A cathode active material slurry was prepared using 98.1 wt% of Li[Ni$_{0.8}$Co$_{0.1}$Mn$_{0.1}$]O$_2$ as a cathode active material.
A lithium secondary battery was prepared in the same manner as in Example 1, except for the type of cathode active material and the electrolyte preparation method.

[Comparative Example 7]

A non-aqueous electrolyte according to Comparative Example 7 was prepared by dissolving 0.6M LiPF$_6$ and 0.5M LiFSI in a mixed solvent of EC/EMC (25:75 vol%), and mixing additives of 0.5 wt% of VEC, 2.0 wt% of PS, and 1.0 wt% of FEC.
A cathode active material slurry was prepared using 98.1 wt% of Li[Ni$_{0.8}$Co$_{0.1}$Mn$_{0.1}$]O$_2$ as a cathode active material.
A lithium secondary battery was prepared in the same manner as in Example 1, except for the type of cathode active material and the electrolyte preparation method.

[Comparative Example 8]

A non-aqueous electrolyte according to Comparative Example 8 was prepared by dissolving 1.2M LiPF$_6$ in a mixed solvent of EC/EMC (25:75 vol%), and mixing additives of 0.5 wt% of VEC, 2.0 wt% of PS, and 1.0 wt% of FEC.
A cathode active material slurry was prepared using 98.1 wt% of Li[Ni$_{0.8}$Co$_{0.1}$Mn$_{0.1}$]O$_2$ as a cathode active material.

A lithium secondary battery was prepared in the same manner as in Example 1, except for the type of cathode active material and the electrolyte preparation method.

The composition of the electrolyte prepared according to Examples and Comparative Examples is as follows. Each of the electrolytes according to Examples and Comparative Examples included the same type/amount of additives, and accordingly, descriptions of the additives were not included in Table 1.

TABLE 1

| Classification | Solvent (vol%) | | | | Salt (M) | |
| | Carbonate solvent | | Propionate solvent | | LiPF$_6$ | LiFSI |
| | EC | EMC | EP | PP | | |
| Example 1 | 24 | 64 | - | 12 | 0.6 | 0.5 |
| Example 2 | 26 | 66 | - | 8 | 0.6 | 0.5 |
| Example 3 | 25 | 65 | - | 10 | 0.6 | 0.2 |
| Example 4 | 24 | 64 | 12 | - | 0.6 | 0.5 |
| Example 5 | 26 | 66 | 8 | - | 0.6 | 0.5 |
| Example 6 | 25 | 65 | 10 | - | 0.6 | 0.2 |
| Example 7 | 25 | 65 | 5 | 5 | 0.6 | 0.5 |
| Example 8 | 25 | 65 | 5 | 5 | 0.6 | 0.2 |
| Comparative Example 1 | 25 | 65 | 10 | - | 1.2 | - |
| Comparative Example 2 | 25 | 65 | - | 10 | 1.2 | - |
| Comparative Example 3 | 25 | 75 | - | - | 1.2 | - |
| Comparative Example 4 | 25 | 75 | - | - | 0.6 | 0.5 |
| Comparative Example 5 | 25 | 65 | - | 10 | 1.2 | - |
| Comparative Example 6 | 25 | 65 | 10 | - | 1.2 | - |
| Comparative Example 7 | 25 | 75 | - | - | 0.6 | 0.5 |
| Comparative Example 8 | 25 | 75 | - | - | 1.2 | - |

(2) Experimental Example

[Experimental Example 1] - Low temperature resistance characteristics

For the lithium secondary batteries prepared according to Examples 1 to 8 and Comparative Examples 1 to 8, initial direct current internal resistance (DCIR) values and DCIR values under a low temperature (-10 °C) environment were measured. Initial DCIR values were measured under a 25 °C environment. The DCIR value under a low temperature environment was measured after exposing the prepared lithium secondary battery to a low temperature (-10°C) environment for 4 hours.

To calculate the initial DCIR value and the DCIR value after a low temperature environment, after discharging the prepared lithium secondary batteries at a C-rate of 0.2C, 0.5C, 1.0C, 1.5C, 2.0C, and 2.5C for 10 seconds at 60% state of charge (SoC), a graph was derived in which the x-axis was set to C-rate and the y-axis was set to voltage measured by the J-pulse (Japan Electric Vehicle Association Standards, JEVS D 713) method. In addition, the slopes of the six points measured in the prepared graph were obtained through a linear regression line to calculate the DCIR for each lithium secondary battery.

TABLE 2

| Classification | Initial DCIR (Unit: mΩ) | DCIR after low temperature environment (Unit: mΩ) |
| Example 1 | 42.7 | 132.8 |

(continued)

| Classification | Initial DCIR (Unit: mΩ) | DCIR after low temperature environment (Unit: mΩ) |
|---|---|---|
| Example 2 | 40.6 | 133.6 |
| Example 3 | 41.4 | 131.5 |
| Example 4 | 44.3 | 138.8 |
| Example 5 | 40.8 | 130.2 |
| Example 6 | 42.9 | 129.3 |
| Example 7 | 43.0 | 127.7 |
| Example 8 | 40.8 | 120.8 |
| Comparative Example 1 | 50.2 | 183.2 |
| Comparative Example 2 | 48.9 | 186.6 |
| Comparative Example 3 | 48.8 | 187.9 |
| Comparative Example 4 | 51.2 | 175.4 |
| Comparative Example 5 | 35.8 | 162.9 |
| Comparative Example 6 | 34.7 | 155.4 |
| Comparative Example 7 | 34.8 | 150.2 |
| Comparative Example 8 | 33.6 | 140.9 |

Referring to Table 2, the lithium secondary battery including the electrolyte according to the Examples shows better resistance characteristics, or lower resistance, than the lithium secondary battery including the electrolyte according to the Comparative Examples.

[Experimental Example 2] - Low temperature discharge characteristics

For the lithium secondary batteries prepared according to Examples 1 to 8 and Comparative Examples 1 to 4, initial discharge capacity and discharge capacity under a low temperature environment were measured.

The initial discharge capacity was measured under a 25 °C environment. To this end, the prepared lithium secondary battery was charged and discharged in a 25 °C environment. Charging was conducted at 0.5C to 3.65V in a constant current-constant voltage (CC-CV) method, then to 3.65V, and the cut-off current was set at 0.05C. Discharging was performed at 0.5C until reaching 2.5V in a constant current (CC) method. The initial discharge capacity was measured during discharge in this cycle. The discharge capacity was measured using a charger/discharger (Toyo-System Co., LTD, TOSCAT-3600).

The discharge capacity after the low temperature environment was measured after exposing the prepared lithium secondary battery to a -10 °C environment for 4 hours. Charging was conducted at 0.5C to 3.65V in a constant current-constant voltage (CC-CV) method, then to 3.65V, and the cut-off current was set at 0.05C. In addition, discharging was performed at 0.5C until reaching 2.5V in a constant current (CC) method. The discharge capacity after the low temperature environment was measured during discharge in this cycle. The discharge capacity after the low temperature environment was measured using the same charger/discharger as the measurement of the initial discharge capacity.

TABLE 3

| Classification | Initial discharge capacity (Unit: mAh) | Discharge capacity after low temperature environment (Unit: mAh) |
|---|---|---|
| Example 1 | 1120 | 422 |
| Example 2 | 1122 | 428 |
| Example 3 | 1111 | 422 |
| Example 4 | 1075 | 418 |
| Example 5 | 1112 | 428 |

(continued)

| Classification | Initial discharge capacity (Unit: mAh) | Discharge capacity after low temperature environment (Unit: mAh) |
|---|---|---|
| Example 6 | 1106 | 423 |
| Example 7 | 1116 | 417 |
| Example 8 | 1109 | 433 |
| Comparative Example 1 | 1058 | 377 |
| Comparative Example 2 | 1075 | 398 |
| Comparative Example 3 | 1082 | 305 |
| Comparative Example 4 | 1073 | 404 |

Referring to Table 3, the lithium secondary battery including the electrolyte according to the Examples shows better capacity retention ratio, Discharge capacity after low temperature environment/Initial discharge capacity, than the lithium secondary battery including the electrolyte according to the Comparative Examples in a low temperature environment.

[Experimental Example 3] - High temperature life characteristics

For the lithium secondary batteries prepared according to Examples 1 to 8 and Comparative Examples 1 to 8, life characteristics at high temperature (45 °C) were confirmed. To this end, the lithium secondary battery according to Examples and Comparative Examples was accommodated in a chamber in a 45 degree environment, and a unit cycle of charging and discharging was performed in the range of SoC 0% to SoC 100%. Here, charging was conducted at 1.OC to 3.65V in a constant current-constant voltage (CC-CV) method, and then to 3.65V, and the cut-off current was set to 0.05C. Discharging was performed at 1.OC until reaching 2.5V in a constant current (CC) method.

A total of 700 such unit cycles were performed, and then the discharge capacity under a high temperature environment of the lithium secondary battery was measured. The discharge capacity under the high temperature environment was measured using the same charger/discharger as the initial discharge capacity measurement. And based on the measured discharge capacity, the capacity retention ratio (%) compared to the first cycle was calculated. The capacity retention ratio compared to the first cycle is defined as the following equation.

Capacity retention ratio (%) compared to the first cycle = (discharge capacity of lithium secondary battery after cycle in high temperature environment) / (discharge capacity of lithium secondary battery before cycle in high temperature environment (initial)) × 100

TABLE 4

| Classification | Initial discharge capacity (Unit: mAh) | Capacity retention ratio (%) |
|---|---|---|
| Example 1 | 1120 | 78.3 |
| Example 2 | 1122 | 78.7 |
| Example 3 | 1111 | 79.4 |
| Example 4 | 1075 | 77.3 |
| Example 5 | 1112 | 78.3 |
| Example 6 | 1106 | 77.2 |
| Example 7 | 1116 | 77.5 |

(continued)

| Classification | Initial discharge capacity (Unit: mAh) | Capacity retention ratio (%) |
|---|---|---|
| Example 8 | 1109 | 78.5 |
| Comparative Example 1 | 1058 | 75.2 |
| Comparative Example 2 | 1075 | 73.2 |
| Comparative Example 3 | 1082 | 76.7 |
| Comparative Example 4 | 1073 | 75.2 |
| Comparative Example 5 | 1839 | 75.6 |
| Comparative Example 6 | 1858 | 76.5 |
| Comparative Example 7 | 1810 | 76.0 |
| Comparative Example 8 | 1883 | 73.3 |

Referring to Table 4, the lithium secondary battery including the electrolyte according to the Examples shows better capacity retention ratio, Discharge capacity after high temperature environment/Initial discharge capacity, than the lithium secondary battery including the electrolyte according to the Comparative Examples in a high temperature environment.

While the present disclosure has been shown and described with reference to certain embodiments thereof, it will be understood by those skilled in the art that various changes in form and details may be made therein without departing from and scope of the present disclosure as defined by the appended claims and their equivalents. Therefore, the scope of the present disclosure should not be limited to the above-described embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the embodiments of the present disclosure have been described in the drawings and specification. Although specific terminologies are used here, those are only to explain the embodiments of the present disclosure. Therefore, the present disclosure is not restricted to the above-described embodiments and many variations are possible within the scope of the present disclosure. It should be apparent to those skilled in the art that various modifications can be made on the basis of the technological scope of the present disclosure in addition to the embodiments disclosed herein.

## Claims

1. An electrolyte for a lithium secondary battery, comprising:

   a non-aqueous organic solvent comprising a propionate solvent; and
   a lithium salt,
   wherein the propionate solvent comprises at least one of ethyl propionate and propyl propionate , and
   the lithium salt comprises lithium hexafluorophosphate and lithium bisfluorosulfonylimide.

2. The electrolyte for a lithium secondary battery according to claim 1, wherein the lithium hexafluorophosphate is included in a concentration of 0.5M to 0.7M with respect to the non-aqueous organic solvent.

3. The electrolyte for a lithium secondary battery according to claim 1 or 2, wherein the lithium bisfluorosulfonylimide is included in a concentration of 0.1M to 0.6M with respect to the non-aqueous organic solvent.

4. The electrolyte for a lithium secondary battery according to any one of claims 1 to 3, wherein the propionate solvent is included in an amount of 5 vol% to 20 vol% with respect to the non-aqueous organic solvent.

**5.** The electrolyte for a lithium secondary battery according to any one of claims 1 to 4, wherein the propionate solvent comprises the ethyl propionate in an amount of 8 vol% to 12 vol% with respect to the non-aqueous organic solvent.

**6.** The electrolyte for a lithium secondary battery according to any one of claims 1 to 5, wherein the propionate solvent comprises the propyl propionate in an amount of 8 vol% to 12 vol% with respect to the non-aqueous organic solvent.

**7.** The electrolyte for a lithium secondary battery according to any one of claims 1 to 6, wherein the non-aqueous organic solvent further comprises a carbonate solvent, and
the carbonate solvent comprises at least one of ethylene carbonate and ethyl methyl carbonate.

**8.** The electrolyte for a lithium secondary battery according to claim 7, wherein the ethylene carbonate is included in an amount of 20 vol% to 30 vol% with respect to the non-aqueous organic solvent, and
the ethyl methyl carbonate is included in an amount of 60 vol% to 70 vol% with respect to the non-aqueous organic solvent.

**9.** The electrolyte for a lithium secondary battery according to any one of claims 1 to 8, further comprising at least one additive selected from a group consisting of cyclic carbonate-based compounds, fluorine-substituted carbonate-based compounds, sultone-based compounds, cyclic sulfate-based compounds, cyclic sulfite-based compounds, borate-based compounds, and phosphate-based compounds.

**10.** The electrolyte for a lithium secondary battery according to any one of claims 1 to 8, further comprising at least one additive selected from a group consisting of vinyl ethylene carbonate, vinylene carbonate, 1,3-propane sultone, fluoro ethylene carbonate, ethylene sulfite, lithium bisoxalato borate, lithium difluorophosphate, and adiponitrile.

**11.** The electrolyte for a lithium secondary battery according to claim 9, wherein the additive is included in 0.01 wt% to 15 wt% with respect to a total weight of the electrolyte.

**12.** A lithium secondary battery comprising:

a cathode comprising a cathode active material;
an anode comprising an anode active material;
a separator disposed between the cathode and the anode; and
an electrolyte comprising a non-aqueous organic solvent comprising a propionate solvent and a lithium salt,
wherein the propionate solvent comprises at least one of ethyl propionate and propyl propionate, and
the lithium salt comprises lithium hexafluorophosphate and lithium bisfluorosulfonylimide.

**13.** The lithium secondary battery according to claim 12,

wherein the non-aqueous organic solvent further comprises a carbonate solvent, and
wherein the cathode active material comprises a lithium metal phosphate particle represented by Formula 1 below:

Formula 1 $\qquad$ $Li_wM_xP_yO_{4+z}$

wherein in Formula 1, $0.9 \le w \le 1.2$, $0.99 \le x \le 1.01$, $0.9 \le y \le 1.2$, $-0.1 \le z \le 0.1$, and M is at least one selected from a group consisting of Fe, Co, Ni, Mn, Ti and V.

**14.** The lithium secondary battery according to claim 13, wherein the M is Fe.

## EUROPEAN SEARCH REPORT

**Application Number**

EP 23 21 5089

### DOCUMENTS CONSIDERED TO BE RELEVANT

| Category | Citation of document with indication, where appropriate, of relevant passages | Relevant to claim |
|---|---|---|
| X | JP 6 675146 B2 (ASAHI KASEI CORP) 1 April 2020 (2020-04-01) * example 1; 110; claim 3 * * the whole document * | 1-14 |
| X | EP 3 819 976 A1 (GUANGZHOU TINCI MATERIALS TECH CO LTD [CN]) 12 May 2021 (2021-05-12) * example 1 to example 14; 18, 19; claim 11, claim 12 * * the whole document * | 1-14 |
| X | EP 3 678 251 A1 (CONTEMPORARY AMPEREX TECHNOLOGY CO LTD [CN]) 8 July 2020 (2020-07-08) * claim 10 * * the whole document * | 1-14 |
| X | EP 3 972 024 A1 (GUANGZHOU TINCI MATERIALS TECH CO LTD [CN]) 23 March 2022 (2022-03-23) * claims 11,13 * * the whole document * | 1-14 |
| X | CN 114 024 099 A (ZHUHAI COSMX BATTERY CO LTD) 8 February 2022 (2022-02-08) * claim 8, examples 1 to 8, table 1 * * the whole document * | 1-14 |
| X | CN 114 024 021 B (ZHUHAI COSMX BATTERY CO LTD) 30 August 2022 (2022-08-30) * claim 8, claim 10, examples 1 to 8, table 1 * * the whole document * | 1-14 |

-/--

**CLASSIFICATION OF THE APPLICATION (IPC)**

INV.
H01M10/0567
H01M10/0569

**TECHNICAL FIELDS SEARCHED (IPC)**

H01M

The present search report has been drawn up for all claims

| Place of search | Date of completion of the search | Examiner |
|---|---|---|
| The Hague | 3 April 2024 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 21 5089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 024 034 A (ZHUHAI COSMX BATTERY CO LTD) 8 February 2022 (2022-02-08) * claims 1, 8, 9; examples 1 to 8; table 1 * * the whole document * | 1-14 | |
| X | CN 113 851 642 B (ZHUHAI SMOOTHWAY ELECT MAT CO LTD) 3 June 2022 (2022-06-03) * claims 5 and 7; table 1 * * the whole document * | 1-14 | |
| X | CN 113 851 716 B (ZHUHAI SMOOTHWAY ELECT MAT CO LTD) 17 May 2022 (2022-05-17) * claim 1, claim 5, claim 7 * * the whole document * | 1-14 | |
| X | CN 114 024 035 A (ZHUHAI COSMX BATTERY CO LTD) 8 February 2022 (2022-02-08) * claims 1 and 8; table 1 * * the whole document * | 1-14 | TECHNICAL FIELDS SEARCHED (IPC) |
| X | WO 2022/199162 A1 (ZHUHAI SMOOTHWAY ELECT MAT CO LTD [CN]) 29 September 2022 (2022-09-29) * claims 4,6 * * the whole document * | 1-14 | |

The present search report has been drawn up for all claims

| Place of search | Date of completion of the search | Examiner |
|---|---|---|
| The Hague | 3 April 2024 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 5089

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2024

| Patent document cited in search report | | | Publication date | Patent family member(s) | | | Publication date |
|---|---|---|---|---|---|---|---|
| JP | 6675146 | B2 | 01-04-2020 | JP | 6675146 | B2 | 01-04-2020 |
| | | | | JP | 2016178125 | A | 06-10-2016 |
| EP | 3819976 | A1 | 12-05-2021 | CN | 110176631 | A | 27-08-2019 |
| | | | | CN | 114937814 | A | 23-08-2022 |
| | | | | EP | 3819976 | A1 | 12-05-2021 |
| | | | | US | 2021384554 | A1 | 09-12-2021 |
| | | | | WO | 2020248565 | A1 | 17-12-2020 |
| EP | 3678251 | A1 | 08-07-2020 | CN | 110265721 | A | 20-09-2019 |
| | | | | CN | 112909319 | A | 04-06-2021 |
| | | | | EP | 3678251 | A1 | 08-07-2020 |
| | | | | ES | 2884131 | T3 | 10-12-2021 |
| | | | | JP | 7159459 | B2 | 24-10-2022 |
| | | | | JP | 2021536112 | A | 23-12-2021 |
| | | | | KR | 20210040144 | A | 12-04-2021 |
| | | | | PT | 3678251 | T | 30-08-2021 |
| | | | | US | 2021175500 | A1 | 10-06-2021 |
| | | | | US | 2024063379 | A1 | 22-02-2024 |
| | | | | WO | 2020057398 | A1 | 26-03-2020 |
| EP | 3972024 | A1 | 23-03-2022 | CN | 110212235 | A | 06-09-2019 |
| | | | | EP | 3972024 | A1 | 23-03-2022 |
| | | | | US | 2022238909 | A1 | 28-07-2022 |
| | | | | WO | 2020248567 | A1 | 17-12-2020 |
| CN | 114024099 | A | 08-02-2022 | CN | 114024099 | A | 08-02-2022 |
| | | | | WO | 2023072108 | A1 | 04-05-2023 |
| CN | 114024021 | B | 30-08-2022 | CN | 114024021 | A | 08-02-2022 |
| | | | | WO | 2023072105 | A1 | 04-05-2023 |
| CN | 114024034 | A | 08-02-2022 | CN | 114024034 | A | 08-02-2022 |
| | | | | WO | 2023072095 | A1 | 04-05-2023 |
| CN | 113851642 | B | 03-06-2022 | CN | 113851642 | A | 28-12-2021 |
| | | | | WO | 2023045164 | A1 | 30-03-2023 |
| CN | 113851716 | B | 17-05-2022 | CN | 113851716 | A | 28-12-2021 |
| | | | | WO | 2023045148 | A1 | 30-03-2023 |
| CN | 114024035 | A | 08-02-2022 | CN | 114024035 | A | 08-02-2022 |
| | | | | WO | 2023072110 | A1 | 04-05-2023 |
| WO | 2022199162 | A1 | 29-09-2022 | CN | 113066975 | A | 02-07-2021 |
| | | | | WO | 2022199162 | A1 | 29-09-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 21 5089

This annex lists the patent family members relating to the patent documents cited in  the above-mentioned European search report.
The members are as contained in the European Patent Office EDP file on
The European Patent Office is in no way liable for these particulars which are merely given for the purpose of information.

03-04-2024

| Patent document cited in search report | Publication date | Patent family member(s) | Publication date |
|---|---|---|---|

----------------------------------------------------------------------------

EPO FORM P0459

For more details about this annex : see Official Journal of the European Patent Office, No. 12/82